(19) Europäisches Patentamt
European Patent Office
Office européen des brevets

(11) Publication number: **0 068 388**
**B1**

(12) **EUROPEAN PATENT SPECIFICATION**

(45) Date of publication of patent specification: **27.03.85**

(51) Int. Cl.$^4$: **C 03 B 37/025,** C 03 C 13/00

(21) Application number: **82105428.5**

(22) Date of filing: **21.06.82**

# (54) Process and device for online dehydrogenation of fibre-drawing preforms.

(30) Priority: **22.06.81 IT 6785781**

(43) Date of publication of application:
**05.01.83 Bulletin 83/01**

(45) Publication of the grant of the patent:
**27.03.85 Bulletin 85/13**

(84) Designated Contracting States:
**AT BE CH DE FR GB LI NL SE**

(56) References cited:
**DE-A-2 928 864**
**FR-A-1 525 536**
**FR-A-2 178 174**
**FR-A-2 384 725**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Modone, Eros**
**Via Cibrario, 45**
**Turin (IT)**
Inventor: **Roba, Giacomo**
**Via Allegro, 63/5**
**Cogoleto (Ge) (IT)**

(74) Representative: **Riederer Freiherr von Paar zu Schönau, Anton et al**
**Freyung 615 Postfach 2664**
**D-8300 Landshut (DE)**

**EP 0 068 388 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a process for the online dehydrogenation of optical fibre preforms as defined in the prior art portion of claim 1, and to devices for carrying out such process as defined in the prior art portions of claims 5 and 6.

The presence of OH-hydroxyl groups in the fibre material is known to give origin to absorption peaks in the minimum attenuation window, used for the transmission in the wavelength range between 0,7 and 1,6 µm. These OH-groups originate in the preform owing to the hydrogen presence in the raw material directly used in the process. More particularly, it is present in chemical reagents (halides and oxygen) from which doped silica is obtained and in the preform supporting means.

In the basic reagents hydrogen exists both in molecular state and in compounds, such as the trichlorosilane, $SiHCl_3$, and others. Combining with oxygen used as reagent carrier, it gives rise to hydrogen-oxygen bonds inside the silica matrix during the particle deposition phase.

The reagent purification can be obtained by various methods: distillation, sublimation, filtering or the use of photochemically activated chloride. Unfortunately, these methods require a pretreatment of the reagents, which, owing to their extreme purity level (99,9999%), are to be given a particular care by the user. Besides, the purification is a supplementary operation, therefore longer fabrication times are required.

It is known (FR—A1 2 178 174) to add to the flow of reagents sent to the reaction chamber some deuterium flow thereby obtaining an isotropic exchange of deuterium for hydrogen during the preform fabrication time. By replacing hydrogen by deuterium, the summits of attenuation are shifted to a longer wave length thereby leaving the technically important window.

The invention aims to control the flow of $D_2$ molecules so as to remain within the silica vitrification conditions and not to induce concurrent parasitic reactions of the $D_2$ molecules. This aim is attained by the invention as specified in claims 1, 5 and 6 which helps to keep the flow rate of the deuterium sufficiently low that only as many deuterium atoms are supplied as hydrogen atoms are to be substituted in the OH-hydroxyl groups.

Further advantages, details and developments of the invention will become apparent from the following description of a preferred exemplary way of realizing the invention, with reference to the accompanying drawings wherein:

- Fig. 1 is a block diagram of an apparatus for carrying out the process.
- Fig. 2 is a longitudinal section of the device denoted by NO in Fig. 1.

Hereinafter reference will be made to a process of optical fibre fabrication of the MCVD type (Modified Chemical Vapour Deposition), according to which the basic reagents are made to react at vapour phase, activating the reaction by a high-temperature furnace. The obtained doped silica is immediately deposited at successive layers inside a supporting tube. The deposition symmetry is cylindrical and the material growth takes place in radial direction.

If during each layer deposition the reagent flow is enriched with deuterium ($D_2$), there are preferably obtained bonds of the O—D type, instead of bonds of the O—H type, thanks to the different bond energy: 463 $KJ \cdot mol^{-1}$ for the O—H bond and 469 $KJ \cdot mol^{-1}$ for the O—D bond at 25°C.

The substitution of $OH^-$ groups for $OD^-$ groups within silica gives origin to a wavelength shift of the fundamental absorption peak, of its overtones and of their combinations. The shift magnitude is proportional to the ratio between the square roots of the reduced masses of the OD and OH groups. In this case only the third overtone of the O—H bond remains within the wavelength range used in optical fibre communications, but it is inferior by about 90 dB/km/ppm to the second overtone, so that its absorption effect is negligible.

The isotropic exchange is induced during the synthesis phase of the compounds ($Si\ O_2$; $Ge\ O_2$; $B_2\ O_3$; $P_2\ O_5$) the preform is made of. Typical reactions occurring in this phase are the following:

$$-\overset{|}{\underset{|}{Si}}-OH+D_2 \rightarrow -\overset{|}{\underset{|}{Si}}-OD+HD \qquad (1)$$

$$2\ \overset{|}{\underset{|}{Si}}=O+H_2+D_2 \rightarrow 2-\overset{|}{\underset{|}{Si}}-OD+H_2 \qquad (2)$$

The first is an exchange reaction on a pre-existing silica site or on the site derivated from the reaction of a starting compound comprising hydrogen ($SiHCl_3$). The reaction product HD can give origin to further reactions resulting in the fixing of a new OD bond in the silica.

The (2) represents the concurrent reaction between molecular hydrogen and deuterium with silica. An OD bond in silica takes place again, while the hydrogen is not involved in the reaction and is ejected as molecular hydrogen, or it reacts with the carrier oxygen and is ejected as $H_2O$.

Besides, the hydrogen that may have been incorporated into the just deposited layer, is replaced by deuterium during the subsequent layer deposition, thus attaining a complete preform dehydrogenation.

Fig. 1 shows the apparatus block diagram for preform fabrication, with the part necessary to the embodiment of the process, provided by the invention.

FR denotes a dashed block containing the devices suited to the reagent conservation and to their flow and control regulation. S0 denotes the tank of the oxygen used as carrier, references V1 . . . V4, V11 . . . V14 denote conventional

valves, FM1 ... FM4 denote mass flow controller and VA1 ... VA3 denote liquid-reagent vaporizers. Analogously SC denotes a tank for reagents in vapour phase at room temperature.

The flow of the oxygen contained in S0, measured and controlled through controllers FM1 ... FM3 and the valves V1 ... V3 and V11 ... V13, passes through vaporizers VA1 ... VA3, where it is enriched by the vapour of the reagents herein contained (Si $Cl_4$, $GeCl_4$, $POCl_3$). Then it combines with the possible flow of the reagent in the vapour state at room temperature ($BCl_3$), controlled by FM4, V4 and V14 and measured by FM4, and arrives through conduit 1 at the reaction, chamber, represented by the dashed block denoted by CR.

In CR, the valve V15 controls the total flow of the reagents which access the supporting tube TQ, inside which the reaction takes place. This is thermally activated by a furnace FO translated in axial direction by a trolley CT. The tube TQ is rotated by two mandrels MA1, MA2, controlled by a suitable engine. Through conduit 2 the residual gases are led outside the tube.

In the dashed block denoted by OT there are contained the valve 5 and the mass flow controller FM5 for controlling and measuring the oxygen flow involved in the reaction.

The dashed block denoted by DD contains the devices controlling the deuterium flow used for the isotopic exchange. PV denotes a rotary vacuum pump, M is a pressure-gauge, SD is the deuterium tank, R is a pressure reducer. P denotes a pressure controller, V6 ... V10 denote some valves and NO a device for mixing deuterium and oxygen, which will be referred to hereinafter. By acting on valves V6 ... V10, vacuum is obtained by means of pump PV in the device NO. Under stationary vacuum conditions, acting on valves V8 and V9, NO is then pressurized at work pressure by oxygen. Turning then V8 and V9 off and V6 and V10 on deuterium is then injected into NO from which through conduit 1 the mixture is transferred to the reaction chamber.

In the particular case in which the deposition rate is of about 1 mg/s and in which a $D_2$ doping ranging from 1 to 100 ppmw (parts per million in weight) is obtained, the deuterium flow is to be controlled so as to maintain values non-inferior to 1 to 100 ng/s respectively considering a 100% exchange efficiency.

In function of the needed doping values, the deuterium flow is to be comprised within the range $1.5 \cdot 10^{14}$ and $1.5 \cdot 10^{16}$ molecules/s, as the $D_2$ molar mass is equal to 4.0272 g . $mol^{-1}$.

It is important to maintain the flow within the values above, in order to remain within the silica vitrification conditions and not to induce concurrent reactions with molecules simultaneously present in the reaction chamber. For instance:

$$Cl_2 + D_2 \rightarrow 2\ DCl$$

In addition the mechanical characteristics of the material could be altered.

The above-mentioned flow levels are too low for the conventional flow-controller which do not present a sufficient sensitivity. A good control in block DD is obtained by the use of device NO, which applies the molecular diffusion principle.

An exploded view of this device represented in a longitudinal section, is shown in Fig. 2.

NO consists of two chambers P1 and P2, equipped with two saw-tooth shaped connectors and apt to be screwed together. In between there is inserted a circular membrane with a central hole having a diameter suitable to ensure pre-determined flow values. The sealing is ensured by two rings OR1 and OR2.

Acting on the pressure reducer R and pressure controller P of Fig. 1, chamber P1 of device NO is pressurized by deuterium and the obtained pressure difference is maintained constant. Therefore in P1 there is a pressure equal to the sum of the oxygen ($P_{02}$) and deuterium ($P_{D2}$) pressures. In P2 the pressure remains at the starting value $P_{02}$, as the chamber is in dynamic state of oxygen flow, by which the deuterium is transported in the reaction chamber.

The deuterium flow $\phi$ through NO is

$$\phi = \sigma \cdot \Psi$$

where $\sigma$ is the area of the membrane hole and $\Psi$ is the effusion rate.

As a rule:

$$\Psi = N \sqrt{\frac{RT}{2\pi M}}$$

where N is the number of molecules per unit of volume, M is the molar mass, R is the gas constant and T is the temperature.

With $P_{D2}$=2050 dyne/cm$^2$, $\phi = 1.5 \cdot 10^{16}$ molecules/s the hole area results $7.85 \cdot 10^{-7}$ cm$^2$.

The above description has been given only by way of example, and not in a limiting sense. Variations and modifications could be made while remaining within the scope of the invention as defined in the claims.

More particularly, deuterium flow can be controlled by making it diffuse from chamber P1 to chamber P2 (Fig. 2) through a thin membrane as a result of the membrane permeability, instead of making it diffuse through a unique central hole. The flow can be controlled in this case by choosing either the pressure difference or the membrane thickness; the membrane can be advantageously made of palladium or of silver-palladium.

**Claims**

1. Process of producing optical fibre preforms whereby doped silica particles obtained by synthesis of vapour-phase reagents at a high temperature, are deposited on a surface of a substrate (TQ), deuterium being added to the reagents so as to obtain online dehydrogenation

of said preforms by isotopic hydrogen-deuterium exchange during the whole preform fabrication time and per each particle, the vapour-phase reagents and the deuterium being provided in the form of a flow that is directed to the substrate characterized in that the deuterium is added to the flow of reagents in such a small flow rate $\phi_D$ that reactions other than the hydrogen-deuterium exchange are avoided, the deuterium flow rate being determined by the following relation:

$$\phi_D = \frac{1}{\eta} \cdot \frac{M_D}{M_H} \cdot \varepsilon \cdot \phi_{R(t)}$$

wherein:

$\eta$=exchange efficiency,

$\frac{M_D}{M_H}$=ratio of molecular weights of $H_2$ and $D_2$,

$\varepsilon$=pollution=H-content in the glass material (in ppmw),

$\phi_{R(t)}$=deposition rate.

2. A process as defined in claim 1, characterized in that said determined-concentration deuterium flow is obtained by molecular effusion.

3. A process as defined in claim 1, characterized in that said determined-concentration deuterium flow is obtained by diffusion through a thin membrane.

4. Process as in any of claims 2 or 3, characterized in that to add to the flow of reagents to be transferred to the reaction chamber (CR) the flow of deuterium contained in a tank (SD) and to control its value, there are provided the following operations:

— vacuum production in a device (NO) separated by a membrane (DF) into two chambers (P1, P2) for the deuterium flow control;
— pressurization of said device at the working pressure with oxygen;
— deuterium pressurization of the chamber (P1) of said device communicating with said tank (SD), the other chamber (P2) being made to communicate with said reaction chamber (CR);
— control of the difference of the partial pressures of deuterium in the chambers of said device in order to keep its value constant.

5. Device for producing optical fibres according to the process defined in claim 2, including a reaction chamber (CR) wherein the vapour-phase reagents are synthesized at high temperature, a conduit (1) supplying the reaction chamber, and metering devices (FR, DD) supplying controlled amounts of the reagents to the conduit, one of the metering devices that delivers deuterium to be added to the reagents comprising a deuterium flow control device (NO), characterized in that the deuterium flow control device (NO) consists of two chambers (P1, P2), equipped with connectors for flexible conduits, apt to be screwed together and separated by a membrane (DF) with a hole gauged such as to obtain the determined flow.

6. Device for producing optical fibres according to the process defined in claim 3, including a reaction chamber (CR) wherein the vapour-phase reagents are synthesized at high temperature, a conduit (1) supplying the reaction chamber, and metering devices (FR, DD) supplying controlled amounts of the reagents of the conduit, one of the metering devices that delivers deuterium to be added to the reagents comprising a deuterium flow control device (NO), characterized in that the deuterium flow control device (NO) consists of two chambers (P1, P2), equipped with connectors for flexible conduits, apt to be screwed together and separated by a thin membrane.

7. Device as defined in claim 6, characterized in that said membrane is made of palladium.

8. Device as in claim 6, characterized in that said membrane is made of palladium-silver.

**Patentansprüche**

1. Verfahren zur Herstellung von Vorformen optischer Fasern, bei dem dotierte Silikapartikel, die durch Synthese von Reaktionsstoffen in der Dampfphase bei hoher Temperatur erhalten werden, an der Oberfläche eines Substrats (TQ) niedergeschlagen werden, wobei Deuterium so zu den Reaktionsstoffen hinzugefügt wird, daß eine im Verfahrensfluß erfolgende Dehydrogenisierung der Vorformen durch isotopischen Wasserstoff-Deuterium-Austausch während der gesamten Vorformfabrikationszeit und für jedes Partikel erhalten wird und die in der Dampfphase befindlichen Reaktionsstoffe und das Deuterium in Form eines Flusses, der zum Substrat geleitet wird, bereitgestellt werden, dadurch gekennzeichnet, daß das Deuterium zum Fluß der Reaktionsstoffe in einer so niedrigen Flußrate $\phi_D$ hinzugefügt wird, daß andere Reaktionen als der Wasserstoff-Deuterium-Austausch vermieden werden, wobei die Deuterium-Flußrate durch die folgende Beziehung bestimmt wird:

$$\phi_D = \frac{1}{\eta} \cdot \frac{M_D}{M_H} \cdot \varepsilon \cdot \phi_{R(t)}$$

wobei:

$\eta$=Austausch-Wirkungsgrad;

$\frac{M_D}{M_H}$=Verhältnis der Molekulargewichte von $H_2$ und $D_2$;

$\varepsilon$=Verunreinigung=H-Gehalt im Glasmaterial (in ppmw);

$\phi_{R(t)}$=Niederschlagungsrate.

2. Verfahren nach Anspruch 1, dadurch gekennzeichnet, daß der Deuteriumfluß mit der festgelegten Konzentration durch molekulare Effusion erhalten wird.

3. Verfahren nach Anspruch 1, dadurch gekennzeichnet, daß der Deuteriumfluß mit der festgelegten Konzentration durch Diffusion durch eine dünne Membran hindurch erhalten wird.

4. Verfahren nach Anspruch 2 oder 3, dadurch gekennzeichnet, daß zum Hinzufügen des Flusses von Deuterium, welches in einem Tank (SD) enthalten ist, zum Fluß der zur Reaktionskammer (CR) zu sendenden Reaktionsstoffe und zur Steuerung des Werts des Deuteriumflusses folgende Operationen durchgeführt werden:

— Herstellung eines Vakuums in einer durch eine Membran (DF) in zwei Kammern (P1, P2) geteilten Vorrichtung (NO) für die Steuerung des Deuteriumflusses;
— Druckaufladung der Vorrichtung auf Arbeitsdruck mit Sauerstoff;
— Druckaufladung der einen Kammer (P1), die mit dem Tank (SD) kommuniziert, der Vorrichtung mit Deuterium, während die andere Kammer (P2) mit der Reaktionskammer (CR) kommuniziert;
— Steuerung der Differenz der Deuterium-Teildrücke in den Kammern der Vorrichtung zur Konstanthaltung ihres Werts.

5. Vorrichtung zum Herstellen optischer Fasern durch das Verfahren nach Anspruch 2, mit einer Reaktionskammer (CR), in der die Reaktionsstoffe in der Dampfphase bei hoher Temperatur synthetisiert werden, einer Leitung (1), durch die die Reaktionskammer gespeist wird, und mit Zumeßvorrichtungen (FR, DD), die gesteuerte Mengen der Reaktionsstoffe in die Leitung geben, wobei eine der Zumeßvorrichtungen, die zu den Reaktionsstoffen hinzuzufügendes Deuterium liefert, eine Deuteriumfluß-Steuervorrichtung (NO) umfaßt, dadurch gekennzeichnet, daß die Deuteriumfluß-Steuervorrichtung (NO) aus zwei Kammern (P1, P2) besteht, die mit Verbindern für flexible Leitungen ausgestattet sind, die zusammenschraubbar sind und die durch eine Membran (DF) getrennt sind, wie ein Loch enthält, was so bemessen ist, daß der festgelegte Fluß erhalten wird.

6. Vorrichtung zum Herstellen optischer Fasern nach dem Verfahren nach Anspruch 3, mit einer Reaktionskammer (CR), in der die Reaktionsstoffe in der Dampfphase bei hoher Temperatur synthetisiert werden, einer Leitung (1), durch die die Reaktionskammer gespeist wird, und mit Zumeßvorrichtungen (FR, DD), die gesteuerte Mengen der Reaktionsstoffe in die Leitung geben, wobei eine der Zumeßvorrichtungen, die zu den Reaktionsstoffen hinzuzufügendes Deuterium liefert, eine Deuteriumfluß-Steuervorrichtung (NO) umfaßt, dadurch gekennzeichnet, daß die Deuteriumfluß-Steuervorrichtung (NO) aus zwei Kammern (P1, P2) besteht, die mit Verbindern für flexible Leitungen ausgestattet sind, die zusammenschraubbar sind und die durch eine dünne Membran getrennt sind.

7. Vorrichtung nach Anspruch 6, dadurch gekennzeichnet, daß die Membran aus Palladium besteht.

8. Vorrichtung nach Anspruch 6, dadurch gekennzeichnet, daß die Membran aus Palladium-Silber besteht.

**Revendications**

1. Procédé pour la fabrication des préformes pour fibres optiques, où les particules de silice dopée obtenues par synthèse des réactants à l'état de vapeur à température élevée, sont déposées sur la surface d'un substrat (TQ), en ajoutant aux réactants du deutérium de manière à obtenir une déshydrogénation en ligne des dites préformes par échange isotopique entre l'hydrogène et le deutérium pour toute la durée de la fabrication de la préforme et pour chaque particule, les réactants à l'état de vapeur et le deutérium étant fournis sous forme d'un flux qui est envoyé vers le substrat, caractérisé en ce que l'on ajoute au flux des réactants du deutérium avec une vitesse de flux $\phi_D$ tellement basse que des réactions différentes de l'échange entre hydrogène et deutérium sont rendues impossibles, puisque la vitesse de flux du deutérium est déterminée par la relation suivante:

$$\phi_D = \frac{1}{\eta} \cdot \frac{M_D}{M_H} \cdot \varepsilon \cdot \phi_{R(t)}$$

où

$\eta$=efficacité de l'échange

$\frac{M_D}{M_H}$=rapport des poids moléculaires entre $D_2$ et $H_2$,

$\varepsilon$=pollution=hydrogène contenu dans le matériel vitreux (en p.p.m.w.)

$\phi_{R(t)}$=vitesse de déposition.

2. Procédé suivant la revendication 1, caractérisé en ce que ledit flux de deutérium de valeur contrôlée est obtenu par effusion moléculaire.

3. Procédé suivant la revendication 1, caractérisé en ce que ledit flux de deutérium de valeur contrôlée est obtenu par diffusion à travers une membrane mince.

4. Procédé suivant les revendications 2 ou 3, caractérisé en ce que pour insérer dans le flux des réactants destinés à la chambre de réaction (CR) le flux de deutérium contenu dans un réservoir (SD) et en contrôler la valeur, les opérations suivantes sont prévues:

— création du vide dans un dispositif (NO), subdivisé par une membrane (DF) en deux chambres (P1, P2) pour contrôler le flux de deutérium;
— pressurisation dudit dispositif à la pression de travail avec oxygène;
— pressurisation avec deutérium de la chambre (P1) dudit dispositif communicante avec ledit réservoir (SD), l'autre chambre (P2) étant mise en communication avec ladite chambre de réaction (CR);
— contrôle de la différence entre les pressions

partiales du deutérium dans les chambres dudit dispositif de sorte à en maintenir la valeur constante.

5. Appareillage pour la fabrication de fibres optiques suivant le procédé de la revendication 2, comprenant une chambre de réaction (CR), où les réactants à l'état de vapeur sont synthètisés à temperature élevée, un conduit (1) pour alimenter la chambre de réaction, et des dispositifs de mesure (FR, DD) pour fournir des quantités contrôlées des réactants vers le conduit, l'un des dispositifs de mesure qui fournit le deutérium à ajouter aux réactants comprenant un dispositif (NO) pour contrôler le flux de deutérium, caractérisé en ce que le dispositif (NO) pour contrôler le flux de deutérium est constitué par deux chambres (P1, P2), équipées de raccords pour conduits flexibles, aptes á être vissées l'une sur l'autre, et séparées par un diaphragme (DF) avec un trou calibré pour obtenir le flux requis.

6. Appareillage pour la fabrication des fibres optiques suivant le procédé décrit dans la revendication 3, comprenant une chambre de réaction (CR), où les réactants à l'état de vapeur sont synthètisés à température élevée, un conduit (1) pour alimenter la chambre de réaction, et des dispositifs de mesure (FR, DD) pour founir des quantités contrôlées des réactants du conduit, l'un des dispositifs de mesure qui fournit du deutérium à ajouter aux réactants comprenant un dispositif (NO) pour contrôler le flux du deutérium, caractérisé en ce que le dispositif (NO) pour contrôler le flux de deutérium est constitué par deux chambres (P1, P2), équipées de raccords pour conduits flexibles, aptes à être vissées l'une sur l'autre, et séparées par une membrane mince.

7. Appareillage suivant la revendication 6, caractérisé en ce que ladite membrane est réalisée en palladium.

8. Appareillage suivant la revendication 6, caractérisé en ce que ladite membrane est réalisée en palladium-argent.

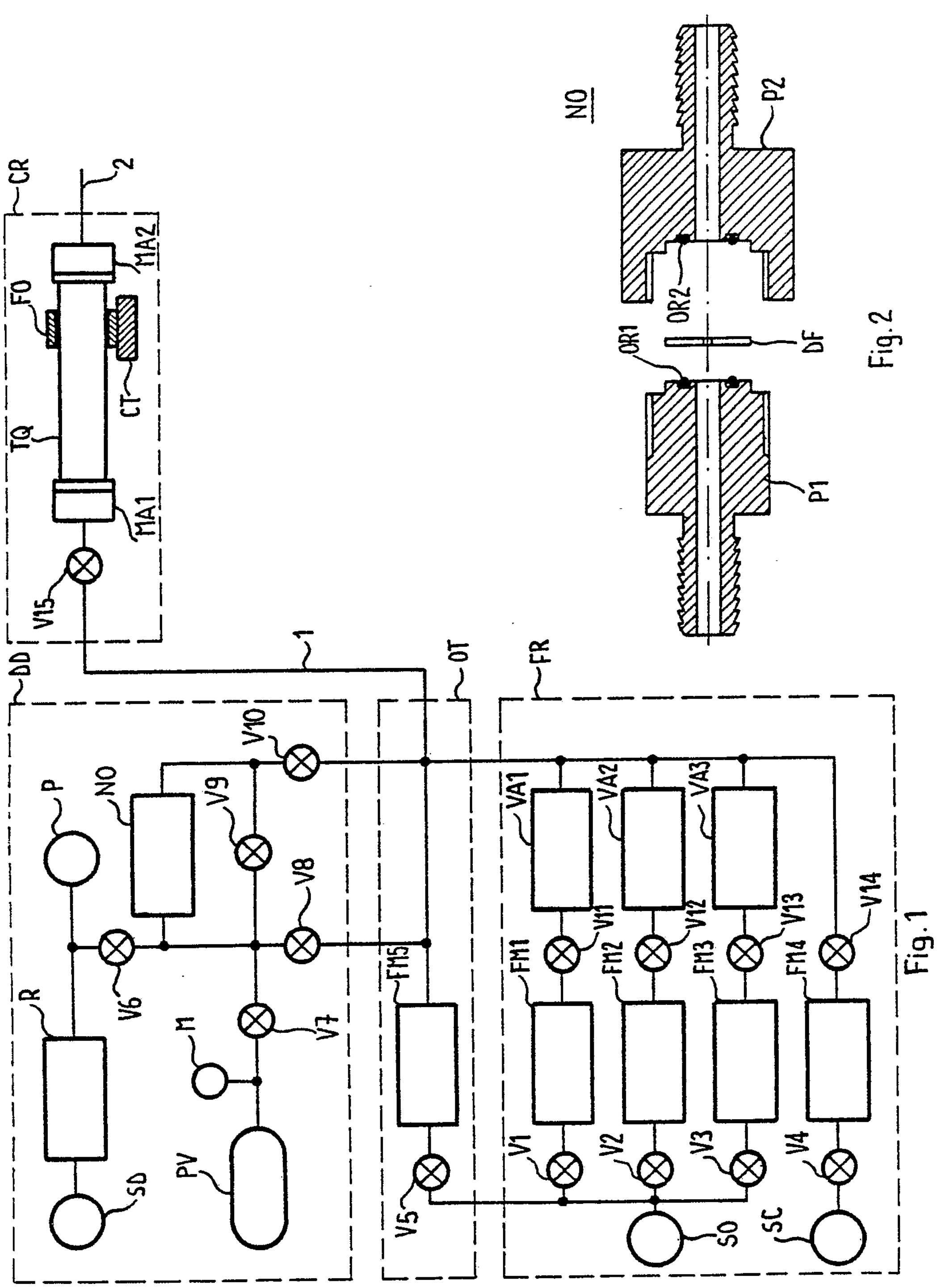
CR
2
FO
MA2
TQ
CT
MA1
V15
DD
1
OT
FR
P
NO
V10
V9
V8
V6
R
V7
M
PV
SD
FM5
V5
VA1
VA2
VA3
V11
V12
V13
V14
FM1
FM2
FM3
FM4
V1
V2
V3
V4
SO
SC
NO
P2
OR2
OR1
DF
P1

Fig.1

Fig.2